Europäisches Patentamt

European Patent Office

Office européen des brevets

(19)

(11) Numéro de publication : **0 330 525 B1**

# (12) FASCICULE DE BREVET EUROPEEN

(45) Date de publication du fascicule du brevet :
15.04.92 Bulletin 92/16

(51) Int. Cl.⁵ : **H02G 5/06**

(21) Numéro de dépôt : **89400093.4**

(22) Date de dépôt : **12.01.89**

(54) **Canalisation électrique préfabriquée adaptable à plusieurs intensités nominales, du type comprenant un support plat rainuré d'isolation pour barres conductrices.**

(30) Priorité : **25.02.88 FR 8802285**

(43) Date de publication de la demande :
**30.08.89 Bulletin 89/35**

(45) Mention de la délivrance du brevet :
**15.04.92 Bulletin 92/16**

(84) Etats contractants désignés :
**BE CH DE ES GB IT LI NL SE**

(56) Documents cités :
**DE-A- 2 042 864**
**FR-A- 2 337 451**
**US-A- 4 082 393**

(73) Titulaire : **TELEMECANIQUE**
**43-45, Boulevard Franklin Roosevelt**
**F-92504 Rueil-Malmaison Cedex (FR)**

(72) Inventeur : **Liebon, Daniel**
**25, Rue de la Cras**
**F-21560 Arc sur Tille (FR)**
Inventeur : **Teinturier, Jean-Yves**
**6, Allée des Meix Domois**
**F-21600 Longvic (FR)**
Inventeur : **Thierry, Jean-Pierre**
**36, Rue des Espaces Verts**
**F-21560 Couternon (FR)**

(74) Mandataire : **Marquer, Francis et al**
**Cabinet Moutard 35, Avenue Victor Hugo**
**F-78960 Voisins le Bretonneux (FR)**

## Description

La présente invention concerne une canalisation électrique préfabriquée adaptable à plusieurs intensités nominales pour la distribution de petites puissances, du type comportant:

– une enveloppe de protection métallique en forme de conduit tubulaire de section approximativement parallélépipédique,

– un support plat qui s'étend longitudinalement à l'intérieur de l'enveloppe et qui est un profilé réalisé par extrusion d'une matière plastique électriquement isolante et constitué par une semelle surmontée perpendiculairement de deux nervures latérales et, à intervalles réguliers parallèlement à celles-ci, de plusieurs nervures internes, ces nervures latérales et internes s'étendant longitudinalement sur toute la longueur de la semelle et étant profilées de façon à délimiter entre elles et avec la semelle plusieurs rainures longitudinales parallèles de même section en C à bords droits, dans chacune desquelles est logée à plat une barre conductrice de courant, ce support des barres conductrices étant appliqué par sa semelle contre le fond de l'enveloppe,

– des prises de dérivation réparties à intervalles réguliers sur la longueur de l'enveloppe et pourvues chacune d'orifices situés en face des barres conductrices pour le passage d'organes de prise de courant amovibles aptes chacun à établir un contact électrique avec une barre conductrice correspondante.

Une telle canalisation électrique à conducteurs en forme de barres disposées à plat dans un support plat rainuré isolant est actuellement utilisée pour la distribution de petites puissances, lesquelles sont habituellement définies pour des intensités nominales de canalisation comprises entre 40 et 125 ampères, les calibres de courant les plus couramment utilisés étant 40 A, 63 A et 100 A.

Dans cette application particulière pour l'alimentation d'appareils de petite puissance, les barres conductrices logées dans les rainures du support isolant de la canalisation sont jusqu'à présent des profilés plats de forme rectangulaire, la section des barres constituant les conducteurs de phase variant en fonction du calibre de la canalisation. Or, lorsqu'on désire utiliser le même support plat rainuré obtenu par extrusion pour tous les calibres de la canalisation, il s'avère que les variations de section des barres conductrices rectangulaires sont trop importantes d'un calibre à l'autre pour pouvoir assurer, en particulier aux bas calibres, une bonne tenue mécanique des barres lors de leur mise en place dans les rainures du support. Il convient également de noter que les barres conductrices rectangulaires sont habituellement réalisées en cuivre dans les calibres de courant indiqués précédemment, ce qui augmente le prix de revient de la canalisation préfabriquée.

Par ailleurs, le fait d'avoir dans les rainures du support isolant des barres conductrices rectangulaires de forte épaisseur réduit, pour une section donnée desdites barres, la surface d'échange thermique entre les barres et l'enveloppe extérieure de la canalisation, ce qui ne permet pas d'assurer une bonne dissipation thermique des barres conductrices.

La présente invention a en particulier pour but de remédier à ces inconvénients et de réaliser une canalisation électrique préfabriquée pour le domaine de la distribution de petites puissances, qui est parfaitement adaptable à plusieurs calibres de courant en utilisant des barres conductrices particulièrement bien profilées et dimensionnées pour pouvoir conserver le même encombrement suivant chacun des calibres de courant et pour augmenter les échanges thermiques.

Elle a également pour but d'assurer une conductivité thermique élevée de la canalisation préfabriquée, et ce, pour tous les calibres de courant.

Selon l'invention, une canalisation électrique préfabriquée du type décrit précédemment, est plus particulièrement caractérisée en ce que pour même support plat rainuré réalisé par extrusion, les barres conductrices correspondant aux diverses intensités nominales de la canalisation présentent la forme générale d'un U dont les ailes et la base ont respectivement la même hauteur externe et la même largeur externe, quelle que soit l'intensité nominale de la canalisation, seule l'épaisseur du U variant en fonction de l'intensité nominale de la canalisation, et qui s'inscrit parfaitement, avec un léger jeu latéral, dans la même section en C des diverses rainures du support.

Ainsi, le fait d'avoir des barres conductrices en U de dimensions externes constantes quel que soit le calibre de courant permet de disposer toujours du même encombrement des barres à l'intérieur du même support isolant, et ce, pour tous les calibres. De plus, par sa forme en U, la barre conductrice présente une surface d'échange thermique qui est nettement plus grande que celle d'une barre rectangulaire de forte épaisseur selon l'art antérieur. En outre, les ailes de chaque barre en U servent avantageusement de guide pour l'engagement par enfilage de la barre dans la rainure correspondante du support ; elles offrent également l'avantage d'améliorer la tenue aux courants de courts-circuits.

Selon une autre caractéristique de l'invention, le fond de chacune des barres conductrices en U est, au niveau de chaque prise de dérivation, surmonté perpendiculairement d'un cavalier de dérivation en matière électriquement conductrice qui s'étend dans le sens de la longueur de la barre en faisant saillie du support des barres conductrices, qui présente en section droite une forme approximative d'Ω dont les deux faces latérales de la partie centrale sont planes et dont les deux pattes latérales sont fixées sur le fond de la barre, et qui est ajusté en hauteur par rapport au fond de la barre suivant l'intensité nominale de la canalisation, de façon à conserver le même encombrement en profondeur de l'ensemble barre-cavalier, quelle que soit l'intensité nominale de la canalisation, chaque organe de prise de courant étant constitué par une pince de contact embrochable sur les faces latérales planes de la partie centrale du cavalier correspondant en Ω par introduction dans l'orifice correspondant de la prise de dérivation.

De préférence, chaque barre conductrice en U est réalisée en aluminium, tandis que chaque cavalier de dérivation en Ω est une pièce bimétallique cuivre sur aluminium ; chaque cavalier bimétallique en Ω est alors fixé par ses deux pattes latérales sur le fond de la barre associée en aluminium, soit par soudage électrique par points, soit par soudage par ultra-sons.

Avantageusement, les deux faces latérales planes de la partie centrale de chaque cavalier bimétallique en Ω sont au moins partiellement revêtues respectivement de deux dépôts d'argent parallèles s'étendant sur toute la longueur du cavalier et constituant respectivement deux aires de contact localisées sur lesquelles est reçue la pince de contact associée.

Suivant un autre aspect de l'invention, la canalisation comporte de plus à l'intérieur de l'enveloppe, entre deux prises de dérivation successives, au moins une cale plate isolante d'application du support des barres conductrices contre le fond de l'enveloppe, qui est interposée en appui et à plat entre le dessus du support des barres et la face interne de la paroi longitudinale de l'enveloppe parallèle à celle constituant le fond de l'enveloppe, et qui possède deux pattes latérales reposant sur le fond de l'enveloppe de part et d'autre du support et étant respectivement en léger appui sur les deux nervures latérales du support des barres, de manière à autoriser un certain coulissement longitudinal du support en cas de dilatation de celui-ci.

Ainsi, ces cales réparties à l'intérieur de l'enveloppe de la canalisation, sur toute la longueur de celle-ci, permettent de plaquer suffisamment le support isolant, et donc indirectement les barres conductrices, sur le fond de l'enveloppe de manière à obtenir une bonne conduction thermique desdites barres.

D'autres caractéristiques et avantages de l'invention apparaîtront mieux dans la description détaillée qui suit et se réfère aux dessins annexés donnés uniquement à titre d'exemple et dans lesquels :

La figure 1 est une vue partielle en perspective éclatée de la canalisation selon l'invention et d'un connecteur de dérivation, les barres conductrices de la canalisation étant conçues pour un certain calibre de courant ;

La figure 2 est une vue schématique en coupe à plus grande échelle de la canalisation selon la ligne II-II de la figure 1 ;

La figure 3 est une vue analogue à la figure 2, avec des barres conductrices conçues pour plusieurs calibres de courant ;

La figure 4 est une vue en coupe à plus grande échelle de la canalisation selon la ligne IV-IV de la figure 1, le connecteur étant branché sur la canalisation ;

La figure 5 est une vue en coupe détaillée d'un cavalier de dérivation ;

La figure 6 est une vue en perspective de ce même cavalier ;

La figure 7 est une vue analogue à la figure 4, avec des barres conductrices conçues pour plusieurs calibres de courant ;

La figure 8 est une vue partielle en perspective de la canalisation dont le couvercle de l'enveloppe a été enlevé ;

La figure 9 est une vue en coupe transversale de la canalisation montrant une cale en appui sur le support des barres conductrices ; et

La figure 10 est une vue en coupe à plus grande échelle de la canalisation selon la ligne X-X de la figure 1, le connecteur étant branché sur la canalisation.

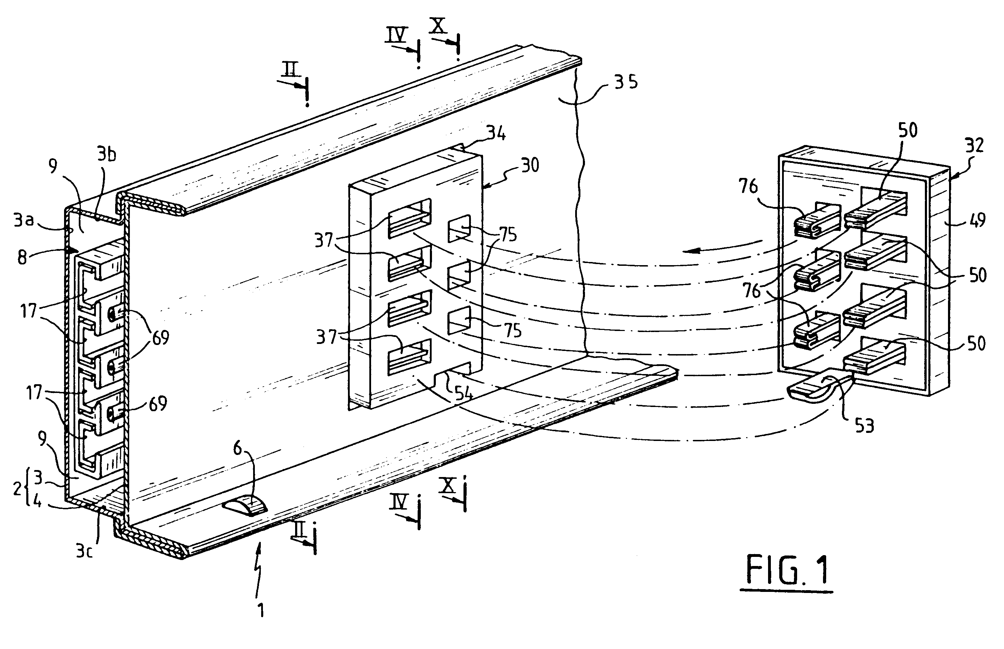

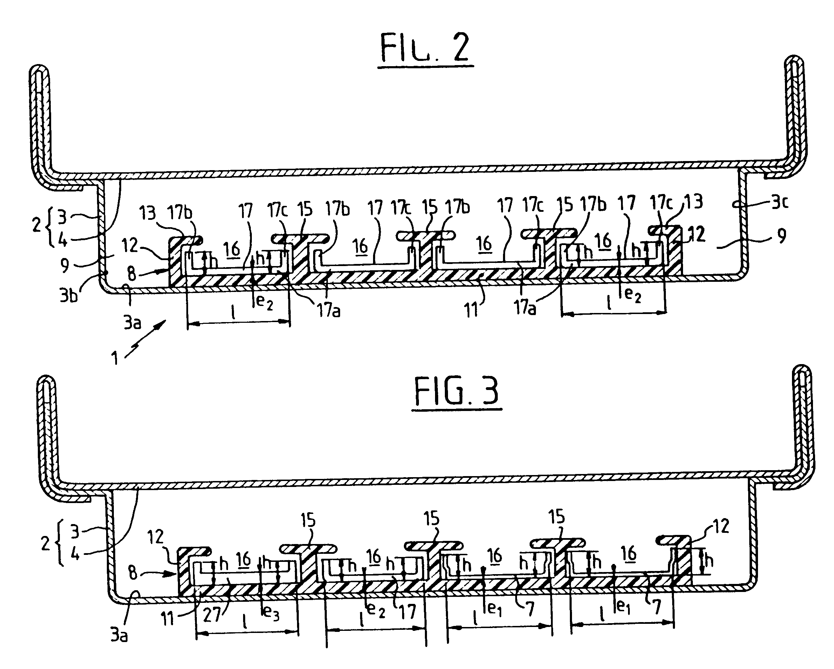

Dans l'exemple représenté sur les figures 1 et 2, la canalisation électrique 1 comprend une enveloppe ou gaine extérieure métallique rigide 2 en forme de conduit tubulaire de section approximativement parallélépipédique se composant d'un corps 3 et d'un couvercle 4 solidarisés l'un à l'autre par tout système de fixation approprié, par exemple par agrafage.

Dans le cadre d'un mode de fixation par agrafage, l'enveloppe fermée 2 présente avantageusement une pluralité de renforts saillants 6, dont un seul a été illustré sur la figure 1, répartis le long de la face interne d'une des parois latérales de l'enveloppe 2 afin d'assurer une bonne rigidité en torsion de l'enveloppe. Chacun de ces renforts 6 est, d'une façon connue en soi, formé à partir des tôles agrafées du corps 3 et du couvercle 4 de l'enveloppe par exécution d'un poinçonnage non débouchant.

Cette enveloppe 2 est de préférence réalisée en matière électriquement conductrice, par exemple en tôle d'acier galvanisé, de manière à pouvoir elle-même servir de conducteur de protection.

Il convient de noter que le corps 3 et le couvercle 4 de l'enveloppe métallique peuvent être réalisés d'une seule pièce de tôle profilée par galetage, le couvercle étant rabattu puis fixé par son extrémité libre, par exemple par agrafage, sur le corps. Cette réalisation en une seule pièce de l'enveloppe de protection procure avantageusement à celle-ci une meilleure rigidité.

Comme le montrent les figures 1 et 2, l'enveloppe 2 renferme un support plat rectangulaire 8 en matière isolante qui est disposé à plat sur le fond 3a du corps 3 de l'enveloppe en ménageant latéralement un espace libre 9 avec chacun des deux flancs latéraux 3b, 3c du corps 3 de l'enveloppe, et qui s'étend dans le sens longitudinal de l'enveloppe 2, sur toute la longueur de celle-ci.

Ce support plat 8 est un profilé réalisé par extrusion d'une matière thermoplastique électriquement isolante. Il comporte, figure 2, une semelle d'appui 11 surmontée perpendiculairement, d'une part, de deux nervures latérales 12 prolongées vers le haut par des ailes 13 pliées à angle droit en se faisant face et, d'autre part, de plusieurs nervures internes 15 en forme de T, notamment trois dans cette forme d'exécution, réparties régulièrement entre les deux nervures latérales 12 et de même hauteur que celles-ci. Ces cinq nervures 12, 15 sont parallèles, s'étendent longitudinalement sur toute la longueur de la semelle 11 du support, viennent d'extrusion avec cette dernière et délimitent entre elles et avec ladite semelle quatre rainures longitudinales parallèles 16 ménagées côte à côte, de même section transversale en C à bords droits, et dans chacune desquelles est logée à plat une barre 17 conductrice de courant de force.

Les barres conductrices 17 sont de préférence réalisées en aluminium et sont électriquement isolées les unes des autres par les nervures 12, 15 du support 8.

Dans la forme d'exécution des figures 1 et 2, les barres conductrices 17 sont au nombre de quatre et correspondent aux conducteurs d'une ligne triphasée avec neutre, le conducteur de protection étant constitué par l'enveloppe 2 elle-même comme on l'a indiqué plus haut. Dans un autre mode de construction, le conducteur de protection peut être constitué par une barre conductrice, de nature identique aux barres 17, disposée à plat dans une rainure supplémentaire prévue dans le support plat isolant.

Suivant l'invention, à partir du support rainuré isolant 8 obtenu par extrusion et destiné à être utilisé tel quel pour plusieurs calibres donnés de la canalisation, les barres conductrices correspondant à ces calibres présentent la forme générale d'un U qui s'inscrit dans la rainure correspondante 16 du support 8 et qui se caractérise par le fait que ses ailes et sa base ont respectivement la même hauteur externe et la même largeur externe, quel que soit le calibre de la canalisation, seule son épaisseur variant en fonction du calibre de la canalisation.

Dans l'exemple de réalisation des figures 1 et 2, les quatre barres conductrices identiques 17 en U sont conçues pour correspondre à un calibre donné de la canalisation 1 tel que, par exemple, le calibre 63 A. Sur la figure 2, chaque barre 17 en U présente une hauteur externe donnée $\underline{h}$ pour ses deux ailes 17b, 17c, une largeur externe donnée $\underline{l}$ pour son âme ou base 17a, et une épaisseur notée $e_2$ qui est ajustée de façon à correspondre au calibre 63 A choisi dans cet exemple. Bien entendu, la hauteur $\underline{h}$ et la largeur $\underline{l}$ de chaque barre 17 en U sont déterminées de manière que la barre s'inscrive parfaitement, avec un léger jeu latéral, dans la rainure correspondante 16 en C du support 8, la base 17a de la barre en U reposant à plat contre le fond de ladite rainure 16.

Sur la figure 3, on a représenté le même support plat rainuré 8 décrit précédemment, qui est susceptible de recevoir successivement et indifféremment dans ses rainures 16 plusieurs jeux de barres conductrices en U correspondant à divers calibres de courant. A titre illustratif et non limitatif, figure 3, les quatre rainures 16 en C du support 8 peuvent loger, soit quatre barres 7, dont deux seulement ont été illustrées, correspondant à un premier calibre de courant tel que, par exemple, le calibre 40 A, soit les quatre barres 17 décrites précédemment, dont une seule a été illustrée sur cette figure 3, correspondant à un second calibre de courant, 63 A par exemple, soit encore quatre barres 27, dont une seule a été illustrée, correspondant à un troisième calibre de courant tel que, par exemple, le calibre 100 A ; comme on l'a indiqué plus haut, les barres conductrices 7, 17, 27 en U de la figure 3 ont toutes des ailes de même hauteur externe $\underline{h}$ et une base de même largeur externe $\underline{l}$, et présentent des épaisseurs respectives différentes $e_1$, $e_2$, $e_3$ ajustées respectivement suivant les trois calibres de courant choisis, en l'espèce, 40 A, 63 A et 100 A.

La canalisation 1 illustrée à la figure 1 comporte également une pluralité de prises de dérivation dont une seule a été illustrée en 30 sur cette figure, qui sont réparties à intervalles réguliers sur la longueur de l'enveloppe 2 et qui sont munies chacune d'une trappe d'obturation (non figurée) à ouverture et à fermeture actionnées par un connecteur de dérivation amovible schématiquement représenté en 32 sur la figure 1.

Dans cet exemple, la prise de dérivation 30 de la figure 1 se présente sous la forme d'un bloc sensiblement parallélépipédique en matière isolante qui est engagé dans une ouverture rectangulaire transversale 34 ménagée dans la paroi longitudinale 35 de l'enveloppe 2.

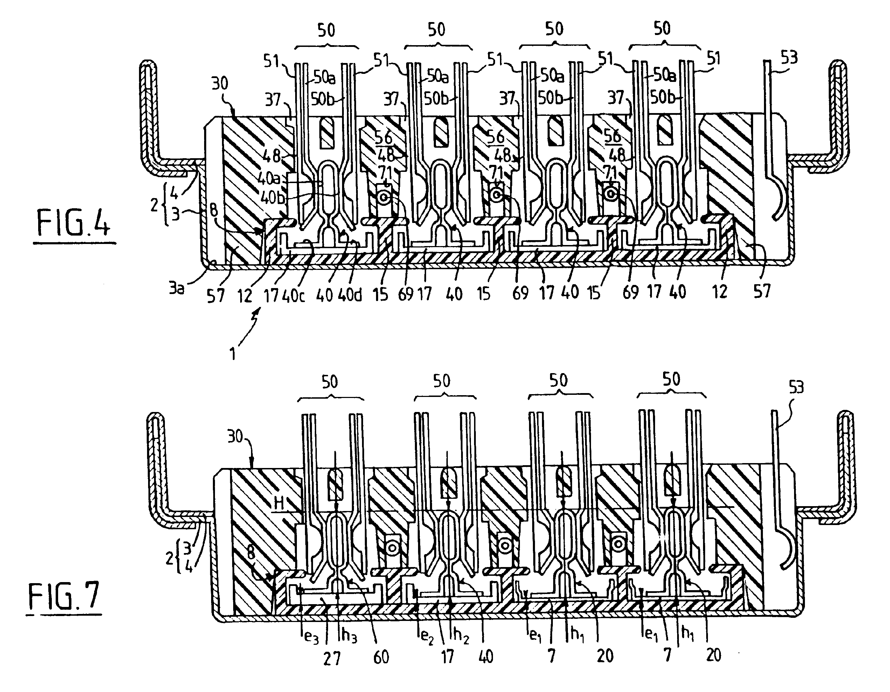

Sur la figure 4, la face supérieure de ce bloc 30 comprend une première série de quatre orifices ou perçages alignés 37 situés respectivement en face des quatre barres conductrices identiques 17 en U et débouchant chacun sur un étrier ou cavalier de dérivation en matière électriquement conductrice, désigné par le repère général 40, monté perpendiculairement sur le fond de la barre correspondante 17 en U et s'étendant dans le sens de la longueur de la barre en faisant saillie du support isolant 8.

Chaque cavalier 40, figure 4, présente en section droite une forme approximative d'Ω dont les deux faces latérales 40a, 40b de sa partie centrale sont planes et dont les deux pattes latérales 40c, 40d sont rapportées sur le fond de la barre correspondante 17 en U par tout moyen de fixation approprié.

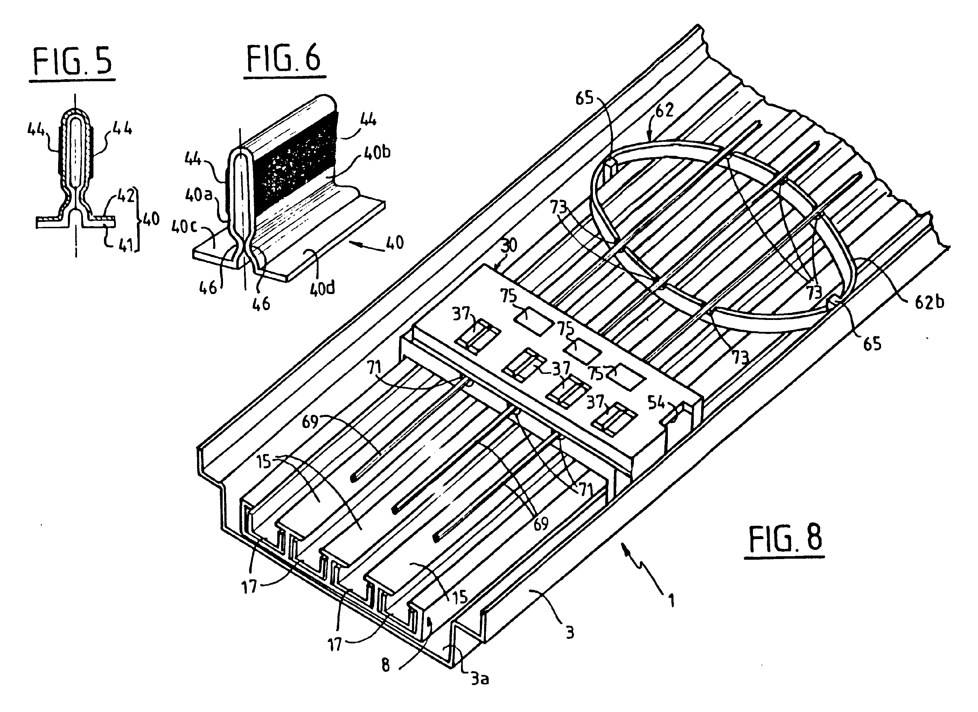

Dans le cadre de barres conductrices en U réalisées en aluminium, chaque cavalier 40 est en bimétal cuivre - aluminium et est fixé par ses deux pattes latérales 40c, 40d sur le fond de la barre associée en aluminium 17, soit par soudage électrique par points, soit par soudage par ultra-sons. On a représenté sur la figure 5 la couche d'aluminium 41 et la mince couche de cuivre 42 qui constituent un cavalier bimétallique 40 en $\Omega$.

Comme le montre la figure 5, la couche de cuivre 42 du cavalier bimétallique 40 est revêtue, sur une partie seulement des deux faces latérales planes de la partie centrale du $\Omega$, de deux dépôts d'argent parallèles 44. Ces deux dépôts d'argent 44, figure 6, s'étendent sur toute la longueur du cavalier 40 et constituent respectivement deux aires ou pistes de contact localisées destinées à recevoir par embrochage une pince de contact.

Sur la figure 6, le cavalier bimétallique 40 en $\Omega$ présente, à chacune de ses extrémités, deux légers repoussés 46 prévus sensiblement à la base de sa partie centrale et mis en contact ponctuel afin d'empêcher tout rapprochement des deux branches du $\Omega$ lors de l'apparition d'un court-circuit.

Dans l'exemple de réalisation illustré à la figure 4, le bloc isolant 30 comprend, dans sa partie inférieure, quatre évidements 48 communiquant respectivement avec les quatre orifices 37, s'étendant parallèlement dans le sens longitudinal des barres conductrices 17 et présentant chacun un entraxe sensiblement égal à celui des barres. Chacun de ces évidements 48 sert de logement à la partie centrale du cavalier correspondant 40 en $\Omega$ faisant saillie du support isolant 8.

Dans cet exemple, le connecteur 32 (figure 1) comprend un boîtier 49 en matière isolante qui porte en saillie une première série de quatre organes de connexion amovibles constitués par des pinces de contact 50 embrochables sur les cavaliers de dérivation 40 par introduction dans les quatre orifices d'accès 37 prévus sur la face supérieure du bloc isolant 30, voir figure 4. Les deux branches 50a, 50b de chaque pince 50 viennent s'appliquer de façon élastique contre les faces latérales argentées du cavalier correspondant 40 en $\Omega$ et sont renforcées élastiquement au moyen de ressorts en lame 51 (figure 4).

Comme le montre la figure 1, les pinces de contact 50 sont montées dans le connecteur 32 à des emplacements dont la disposition correspond à celle des orifices 37 ; de façon classique, elles ne peuvent pénétrer dans les orifices correspondants 37 qu'après ouverture de la trappe d'obturation (non figurée) au moyen d'un doigt de commande 53 porté en saillie par le boîtier 49 du connecteur et venant s'engager dans une ouverture 54 pratiquée sur un bord latéral du bloc de dérivation 30.

Le bloc 30 illustré à la figure 4 présente des cloisonnements internes de séparation 56, au nombre de trois dans ce mode d'exécution, s'étendant parallèlement dans le sens longitudinal de la canalisation et s'appliquant à plat sur la face supérieure des trois nervures internes 15 en T du support 8, ainsi que deux pattes ou jambes latérales 57 reposant sur le fond 3a du corps 3 de l'enveloppe, de part et d'autre du support 8, et étant respectivement en léger appui contre les deux nervures latérales 12 du support. Ces cloisonnements 56 et ces jambes 57 du bloc isolant 30 permettent de plaquer suffisamment le support 8, et donc indirectement les barres conductrices 17, contre le fond de l'enveloppe 2 de façon à obtenir une bonne conduction thermique desdites barres, tout en autorisant un certain coulissement longitudinal du support 8 en cas de dilatation de celui-ci.

Par ailleurs, lorsqu'on utilise le même support plat rainuré 8 pour plusieurs jeux de barres conductrices en U correspondant à divers calibres de courant et se distinguant les uns des autres par le fait que les épaisseurs des barres en U sont différentes suivant les calibres de courant, comme on l'a vu précédemment, les cavaliers de dérivation en $\Omega$ associés aux diverses barres sont alors ajustés en hauteur suivant les calibres de courant de manière à conserver le même encombrement en profondeur pour les ensembles barres-cavaliers quel que soit le calibre de courant.

Ainsi, sur la figure 7 qui reprend les barres conductrices 7, 17, 27 en U décrites précédemment en référence à la figure 3, ces barres présentant des épaisseurs respectives différentes $e_1$, $e_2$, $e_3$ ajustées respectivement suivant les trois calibres de courant retenus (par exemple 40 A, 63 A et 100 A), on a représenté respectivement en 20, 40, 60 les cavaliers de dérivation en $\Omega$ associés aux barres 7, 17, 27 et présentant des hauteurs respectives différentes $h_1$, $h_2$, $h_3$ définies en fonction des épaisseurs des barres respectives de façon à être tous situés à un même niveau prédéterminé, noté H.

Entre deux prises de dérivation successives du type représenté en 30 sur la figure 1, il est prévu de disposer à l'intérieur de l'enveloppe de la canalisation 1 des cales plates en matière isolante, par exemple au nombre de deux, dont une seule a été illustrée en 62 sur la figure 8, destinées chacune à appliquer le support 8 des barres conductrices contre le fond 3a du corps 3 de l'enveloppe.

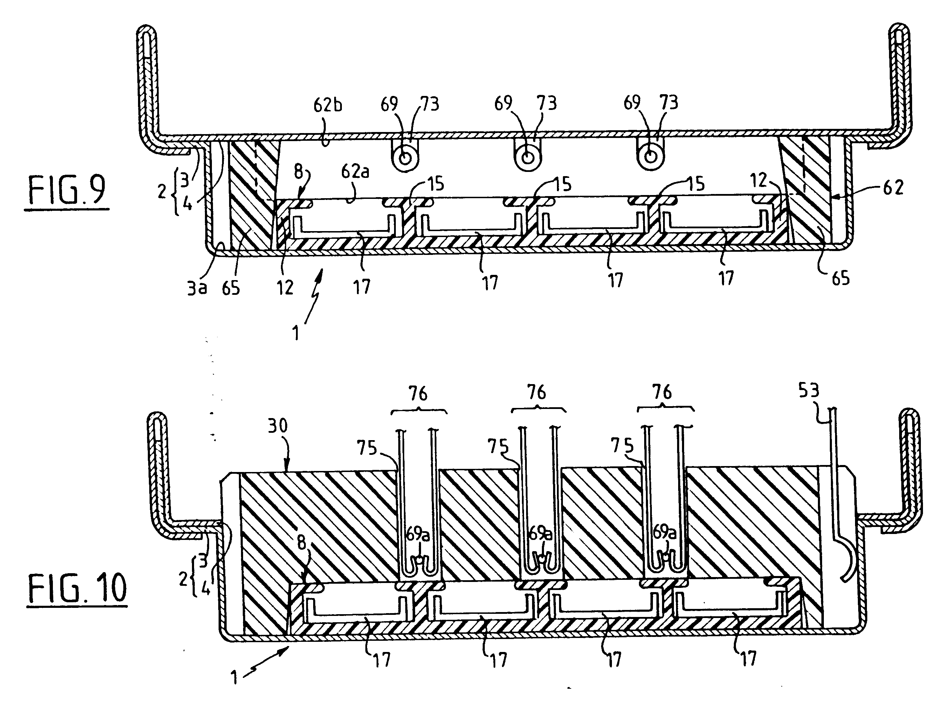

Dans cet exemple de réalisation, la cale d'appui 62 de la figure 8 présente une forme générale d'anneau dont le bord inférieur 62a (figure 9) repose sur la face supérieure des nervures 12, 15 du support 8 et dont le bord supérieur 62b est en appui contre la face interne du couvercle 4 de l'enveloppe 2, voir figure 9. Cette cale 62 présente également deux pattes ou jambes latérales 65 reposant sur le fond 3a du corps 3 de l'enveloppe, de part et d'autre du support 8, et étant respectivement en léger appui contre les deux nervures latérales 12 du support. D'une manière semblable au bloc isolant 30 décrit précédemment, la cale isolante 62 permet également de plaquer suffisamment le support 8, et donc indirectement les barres conductrices 17, contre le fond de l'enveloppe 2, de manière à obtenir une bonne conduction thermique desdites barres, tout en autorisant un certain coulissement longitudinal du support 8 en cas de dilatation de celui-ci.

Comme le montrent les figures 1, 4, 8 et 9, la canalisation 1 peut également loger une pluralité de conducteurs isolés 69 à courant faible, et notamment trois dans cette forme d'exécution, utilisables à des fins de télécommande ou de télétransmission.

Dans cet exemple de réalisation, figure 8, les trois conducteurs 69 s'étendent parallèlement dans le sens longitudinal de la canalisation en étant disposés respectivement au-dessus des trois nervures internes 15 en T du support 8 des barres conductrices. Ces trois conducteurs 69 traversent chaque bloc de dérivation 30 via trois ouvertures 71 percées respectivement dans les trois cloisonnements internes 56 du bloc (figure 4). Ils traversent également chaque cale 62 en forme d'anneau via des encoches ou échancrures 73 en forme de U, visibles à la figure 8, pratiquées à partir du bord supérieur 62b de la cale et réparties en trois paires parallèles alignées respectivement avec les trois ouvertures 71 ménagées dans le bloc isolant 30.

Ainsi, chaque cale intermédiaire échancrée 62 rapportée à l'intérieur de l'enveloppe de la canalisation sert avantageusement à la fois de pièce d'appui du support des barres conductrices contre le fond de l'enveloppe et de pièce de support et de maintien des conducteurs isolés à courant faible.

Dans cet exemple, figures 1, 8 et 10, la face supérieure du bloc de dérivation 30 comprend une seconde série de trois orifices ou perçages alignés 75 communiquant respectivement avec les trois ouvertures 71 (figure 8) de passage des conducteurs 69 et donnant accès à des portions dénudées 69a (figure 10) des trois conducteurs. Le boîtier 49 du connecteur 32 (figure 1) porte en saillie une seconde série de trois organes de connexion amovibles constitués par exemple par des pinces de contact 76 venant coopérer avec les portions dénudées 69a des conducteurs par introduction dans les trois orifices d'accès 75 prévus sur la face supérieure du bloc isolant 30, voir figure 10.

## Revendications

1. Canalisation électrique préfabriquée adaptable à plusieurs intensités nominales données et destinées en particulier pour la distribution de petites puissances, comportant :

    – une enveloppe de protection (2) métallique en forme de conduit tubulaire de section approximativement parallélépipédique,

    – un support plat (8) qui s'étend longitudinalement à l'intérieur de l'enveloppe et qui est un profilé réalisé par extrusion d'une matière plastique électriquement isolante et constitué par une semelle (11) surmontée perpendiculairement de deux nervures latérales (12) et, à intervalles réguliers parallèlement à celles-ci, de plusieurs nervures internes (15), ces nervures latérales et internes s'étendant longitudinalement sur toute la longueur de la semelle et étant profilées de façon à délimiter entre elles et avec la semelle plusieurs rainures longitudinales parallèles (16) de même section en C à bords droits, dans chacune desquelles est logée à plat une barre conductrice de courant (7 ; 17 ; 27), ce support des barres conductrices étant appliqué par sa semelle contre le fond (3a) de l'enveloppe,

    – des prises de dérivation (30) réparties à intervalles réguliers sur la longueur de l'enveloppe (2) et pourvues chacune d'orifices (37) situés en face des barres conductrices pour le passage d'organes de prise de courant (50) amovibles aptes chacun à établir un contact électrique avec une barre conductrice correspondante, caractérisée en ce que pour le même support plat rainuré (8) réalisé par extrusion, les barres conductrices (7 ; 17 ; 27) correspondant aux diverses intensités nominales de la canalisation présentent la forme générale d'un U dont les ailes et la base ont respectivement la même hauteur externe et la même largeur externe quelle que soit l'intensité nominale de la canalisation, seule l'épaisseur du U variant en fonction de l'intensité nominale de la canalisation, et qui s'inscrit parfaitement, avec un léger jeu latéral, dans la même section en C des diverses rainures (16) du support (8).

2. Canalisation électrique selon la revendication 1, caractérisée en ce qu'au niveau de chaque prise de dérivation (30), le fond de chacune des barres conductrices (7 ; 17 ; 27) en U est surmonté perpendiculairement d'un cavalier de dérivation (20 ; 40 ; 60) en matière électriquement conductrice qui s'étend dans le sens de la longueur de la barre en faisant saillie du support (8) des barres conductrices, qui présente en section droite une forme approximative d'$\Omega$ dont les deux faces latérales de la partie centrale sont planes et dont les deux pattes latérales sont fixées sur le fond de la barre, et qui est ajusté en hauteur par rapport au fond de la barre suivant l'intensité nominale de la canalisation de façon à conserver le même encombrement en profondeur de l'ensemble barre-cavalier quelle que soit l'intensité nominale de la canalisation, chaque organe de prise de courant étant constitué par une pince de contact (50) embrochable sur les faces latérales planes de la partie centrale du cavalier correspondant (20 ; 40 ; 60) en $\Omega$ par introduction dans l'orifice correspondant (37) de la prise de dérivation.

3. Canalisation électrique selon la revendication 2, caractérisée en ce que chaque barre conductrice (7 ; 17 ; 27) en U est réalisée en aluminium, tandis que chaque cavalier de dérivation (20 ; 40 ; 60) en Ω est une pièce bimétallique cuivre sur aluminium, et que chaque cavalier bimétallique en Ω est fixé par ses deux pattes latérales sur le fond de la barre associée en aluminium, soit par soudage électrique par points, soit par soudage par ultra-sons.

4. Canalisation électrique selon la revendication 3, caractérisée en ce que les deux faces latérales planes de la partie centrale de chaque cavalier bimétallique en Ω sont au moins partiellement revêtues respectivement de deux dépôts d'argent (44) parallèles s'étendant sur toute la longueur du cavalier et constituant respectivement deux aires de contact localisées sur lesquelles est reçue la pince de contact associée (50).

5. Canalisation électrique selon l'une des revendications 2 à 4, caractérisée en ce que chacune des prises de dérivation (30) se présente sous la forme d'un bloc sensiblement parallélépipédique en matière isolante qui est engagé dans une ouverture rectangulaire (34) ménagée dans la paroi longitudinale (35) de l'enveloppe parallèle à celle constituant le fond (3a) de l'enveloppe, et qui comporte en sa face inférieure une pluralité d'évidements (48) en nombre égal à celui des barres conductrices, aménagés côte à côte parallèlement aux barres avec le même entraxe que celles-ci, et séparés par des cloisonnements longitudinaux parallèles (56), chacun de ces évidements logeant la partie en saillie du cavalier de dérivation en Ω associé à la barre conductrice correspondante de manière que le bloc isolant (30) s'applique à plat par ses cloisonnements sur les nervures (12, 15) du support (8) des barres conductrices, chaque évidement (48) communiquant avec l'orifice (37) prévu sur la face supérieure du bloc isolant pour permettre à la pince de contact (50) d'accéder au cavalier de dérivation correspondant.

6. Canalisation électrique selon la revendication 5, caractérisée en ce que le bloc isolant (30) possède deux jambes latérales (57) reposant sur le fond (3a) de l'enveloppe de part et d'autre du support (8) des barres conductrices et étant respectivement en léger appui sur les deux nervures latérales (12) du support des barres de manière à autoriser un certain coulissement longitudinal du support (8) en cas de dilatation de celui-ci.

7. Canalisation électrique selon la revendication 5 ou 6, caractérisée en ce que les cloisonnements longitudinaux (56) du bloc isolant (30) sont percés chacun axialement d'une ouverture (71) servant au passage d'un conducteur électrique isolé à courant faible (69) suivant une direction parallèle à l'axe longitudinal de l'enveloppe, et que la face supérieure du bloc isolant (30) comporte des perçages (75) communiquant respectivement avec les ouvertures (71) de passage des conducteurs (69) et donnant chacun accès à une portion dénudée (69a) du conducteur susceptible de recevoir par engagement dans le perçage associé un organe de connexion électrique amovible (76).

8. Canalisation électrique selon l'une des revendications 1 à 6, caractérisée en ce qu'elle comporte à l'intérieur de l'enveloppe (2), entre deux prises de dérivation successives, au moins une cale plate isolante (62) d'application du support (8) des barres conductrices contre le fond (3a) de l'enveloppe, qui est interposée en appui et à plat entre le dessus du support (8) des barres et la face interne de la paroi longitudinale (35) de l'enveloppe parallèle à celle constituant le fond de l'enveloppe, et qui possède deux pattes latérales (65) reposant sur le fond (3a) de l'enveloppe de part et d'autre du support (8) et étant respectivement en léger appui sur les deux nervures latérales (12) du support des barres de manière à autoriser un certain coulissement longitudinal du support (8) en cas de dilatation de celui-ci.

9. Canalisation électrique selon les revendications 7 et 8, caractérisée en ce que la cale (62) présente une forme générale d'anneau dont le bord inférieur (62a) repose en partie sur les nervures (12, 15) du support (8) des barres conductrices et dont le bord supérieur (62b) comporte une pluralité d'encoche (73) en nombre égal au double de celui des ouvertures (71) ménagées dans le bloc isolant (30), ces encoches (73) étant alignées par paire respectivement avec lesdites ouvertures suivant des directions respectives parallèles à l'axe longitudinal de l'enveloppe, chaque paire d'encoches alignées servant à supporter et à maintenir le conducteur électrique isolé à courant faible (69) passant par l'ouverture correspondante (71) du bloc isolant.

**Patentansprüche**

1. Vorgefertigte Leitung, die auf mehrere gegebene Nennströme anwendbar und insbesondere zur Verteilung von Strom geringer Stärke bestimmt ist, mit :

– einem Schutzgehäuse (2) aus Metall, in Form einer Rohrleitung mit etwa quaderförmigem Querschnitt,

– einem flachen Träger (8), der sich in Längsrichtung in der Hülle erstreckt und ein Profilstück ist, hergestellt durch Extrudieren aus elektrisch leitendem Plastikmaterial und bestehend aus einer Grundplatte (11), auf der zwei Seitenrippen (12) senkrecht angeordnet sind und, parallel dazu, in regelmässigen Abständen, mehrere innere Rippen (15), wobei besagte seitliche und innere Rippen sich in Längsrichtung über die gesamte Länge der Grundplatte erstrecken und zwischeneinander und mit der Bodenplatte mehrere parallele, im Querschnitt C-förmige, Längsrinnen (16) mit geraden Rändern abgrenzen und in jeder dieser Rinnen eine Stromleiterschiene (7 ; 17 ; 27) flach gelagert ist und dieser Träger für die Leiterschienen mit seiner Grundplatte auf dem Boden (3a) des Gehäuses aufliegt,
 – regelmässig über die Länge des Gehäuses (2) verteilten Stromabzweigstellen (30), die jeweils gegenüber den Leiterschienen mit Öffnungen (37) versehen sind, welche von lösbaren Stromentnahmeelementen (50) durchgriffen werden, die jeweils den elektrischen Kontakt mit einer entsprechenden Leiterschiene herstellen können, dadurch gekennzeichnet, dass für den gleichen flachen, mit Rinnen versehenen und durch Extrudieren hergestellten, Träger (8) die Leiterschienen (7 ; 17 ; 27), welche den verschiedenen Nennströmen der Leitungen entsprechen, die allgemeine Form eines U haben, dessen Schenkel und Basis jeweils die gleiche äussere Höhe und Breite haben, unabhängig vom Nennstrom der Leitung und nur die Dicke des Us je nach dem Nennstrom der Leitung verschieden ist und diese U-Form mit einem schmalen seitlichen Freiraum genau in den C-förmigen Querschnitt der verschiedenen Rinnen (16) des Trägers (8) passt.

2. Elektrische Leitung nach Anspruch 1, dadurch gekennzeichnet, dass in Höhe jeder Stromabzapfstelle (30) auf dem Boden jeder U-förmigen Leiterschiene (7 ; 17 ; 27) senkrecht ein Abzweigstück (20 ; 40 ; 60) aus elektrisch leitendem Material angeordnet ist, welches sich in Längsrichtung der Leiterschiene erstreckt, aus deren Träger (8) herausragt und dessen Querschnitt ungefähr die Form eines Omega hat, dessen zwei Seitenflächen des mittleren Teils gerade verlaufen, dessen zwei Seitenflügel auf dem Boden der Leiterschene befestigt sind und dessen Höhe im Verhältnis zum Boden der Leiterschiene je nach dem Nennstrom der Leitung eingestellt wird, um die gleichen Tiefenausmasse der Leiterschiene-Abzapfstückeinheit für alle Nennstromstärken der Leitung beizubehalten, wobei jedes Stromabzapfelement von einer Kontaktklemme (50) gebildet wird, welche auf die geraden Seitenflächen des mittleren Teils des entsprechenden omegaförmigen Abzweigstückes (20 ; 40 ; 60) aufgeschoben werden kann, durch Einführen in die entsprechende Öffnung (37) der Stromabzweigstelle.

3. Elektrische Leitung nach Anspruch 2, dadurch gekennzeichnet,dass jede U-förmige Leiterschiene (7 ; 17 ; 27) aus Aluminium ist, während jedes omegaförmige Abzweigstück (20 ; 40 ; 60) ein Bimetallstück aus Kupfer auf Aluminium ist und jedes omegaförmige Bimetallstück durch seine beiden seitlichen Flügel auf dem Boden der zugeordneten Leiterschiene aus Aluminium befestigt ist, entweder durch elektrisches Punktschweissen oder durch Ultraschallschweissen.

4. Elektrische Leitung nach Anspruch 3, dadurch gekennzeichnet, dass die beiden geraden Seitenflächen des Mittelteils eines jeden omegaförmigen Bimetallstückes jeweils mindestens teilweise mit zwei parallelen Silberbeschichtungen (44) versehen sind, die sich über die gesamte Länge des Abzweigstückes erstrecken und jeweils zwei lokale Kontaktzonen bilden, auf die die zugeordnete Kontaktklemme (50) geschoben wird.

5. Elektrische Leitung nach einem der Ansprüche 2 bis 4, dadurch gekennzeichnet, dass jede der Abzweigstellen (30) die Form eines im wesentlichen quaderförmigen Blocks aus Isoliermaterial hat, welcher in eine rechteckige Öffnung (34) eingeführt wird, die in der zur Bodenwand parallelen Längwand (35) des Gehäuses vorgesehen ist und welcher auf der Unterseite eine Vielzahl von Aussparungen (48) aufweist, deren Zahl der Anzahl der Leiterschienen entspricht und die nebeneinander parallel zu den Leiterschienen angeordnet sind, mit dem gleichen Achsenabstand wie diese und durch parallele Längswände (56) voneinander getrennt sind, wobei jede dieser Aussparungen den hervorspringenden Teil des omegaförmigen, der entsprechenden Leiterscniene zugeordneten Abzweigstückes aufnimmt, sodass die Trennwände des Isolierblocks (30) flach auf den Rippen (12, 15) des Trägers (8) für die Leiterschienen aufliegen und jede Aussparung (48) mit der in der oberen Fläche des Isolierblocks vorgesehenen Öffnung (47) in Verbindung steht, damit die Kontaktklemme (50) Zugang zum entsprechenden Abzweigstück hat.

6. Elektrische Leitung nach Anspruch 5, dadurch gekennzeichnet, dass der Isolierblock (30) zwei Seitenschenkel (57) aufweist, die auf dem Boden (3a) des Gehäuses zu beiden Seiten des Trägers (8) für die Leiterschienen angeordnet sind und sich jeweils leicht auf die beiden seitlichen Rippen (12) des Trägers für die Leiterschienen stützen, um so eine gewisse Verschiebung des Trägers in Längsrichtung zu ermöglichen, wenn sich dieser ausdehnt.

7. Elektrische Leitung nach Anspruch 5 oder 6, dadurch gekennzeichnet, dass die Längstrennwände (56) des Isolierblocks (30) jeweils mit einer axialen Öffnung (71) versehen sind, durch die ein isolierter elektrischer Schwachstromleiter (69) in einer zur Längsachse des Gehäuses parallelen Richtung gefürt ist und dass die obere Fläche des Isolierblocks (30) Bohrungen (75) aufweist, die jeweils mit den Durchgangsöffnungen (71) für die Leiter (69) in Verbindung stehen und jeweils den Zugang zu einem entblössten Abschnitt (69a) des Leiters ermöglichen, welcher durch Einführen in die zugeordnete Bohrung mit einem herausziehbaren elektrischen Verbindungsorgan (76) in Verbindung gebracht werden kann.

8. Elektrische Leitung nach einem der Ansprüche 1 bis 6,
dadurch gekennzeichnet, dass sie im Inneren des Gehäuses (2) zwischen zwei aufeinanderfolgenden Abzweigpunkten mindestens ein flaches isolierendes Passtück (62) aufweist, zur Auflage des Trägers (8) der Leiterschienen auf dem Boden (3a) des Gehäuses und dieses Passtück flach zwischen der Oberfläche des Trägers (8) auf der es ruht und der Innenfläche der Längswand (35) des Gehäuses angeordnet ist, parallel zur Wand, welche den Gehäuseboden bildet, und zwei seitliche Schenkel (65) aufweist, die auf dem Boden (3a) des Gehäuses zu beiden Seiten des Trägers (8) aufliegen und sich jeweils leicht auf die beiden seitlichen Rippen (12) des Trägers stützen, um eine Längsverschiebung möglich zu machen, wenn sich dieser ausdehnt.

9. Elektrische Leitung nach den Ansprüchen 7 und 8,
dadurch gekennzeichnet, dass das Passtück (62) die allgemeine Form eines Ringes hat, dessen unterer Rand (62a) teilweise auf den Rippen (12, 15) des Trägers (8) der Leiterschienen ruht und dessen oberer Rand (62b) eine Vielzahl von Einkerbungen (73) aufweist, deren Anzahl zweimal so gross ist, wie die Zahl der im Isolierblock (30) vorgesehenen Öffnungen (71), wobei diese Einkerbungen (73) jeweils paarweise mit besagten Öffnungen fluchten und zwar jeweils in einer zur Gehäuselängsachse parallelen Richtung und jedes fluchtende Kerbenpaar den die entsprechende Öffnung (71) im Isolierblock durchgreifenden isolierten elektrischen Schwachstromleiter (69) trägt und in Position hält.

## Claims

1. Prefabricated electric ducting adaptable for several given rated currents and intended in particular for distributing low powers, comprising :
– a metal protective casing (2) in the form of a tubular conduit with an approximately parallelepipedic section,
– a flat support (8) which extends longitudinally inside the casing and which is a shaped piece made by extruding an electrically insulating plastic material and formed by a base plate (11) on which are mounted perpendicularly two lateral ribs (12) and, at even spacings parallel thereto, several internal ribs (15), these lateral and internal ribs extending longitudinally over the whole length of the base plate and being shaped so as to define therebetween and with the base plate several parallel longitudinal grooves (16) of the same C section with straight edges, in each of which a current conducting bar (7 ; 17 ; 27) is housed flat, this support for the conducting bars being applied by its base plate against the bottom (3a) of the casing,

– tapping points (30) spaced evenly apart over the length of the casing (2) and each being provided with orifices (37) situated opposite the conducting bars for the passage of removable current tapping members (50), each capable of providing an electric contact with a corresponding conducting bar, characterized in that, for the same flat grooved support (8) formed by extrusion, the conducting bars (7 ; 17 ; 27) corresponding to the different rated currents of the ducting have the general form of a U whose legs and base have respectively the same external height and the same external width, whatever the rated current of the ducting, only the thickness of the U varying as a function of the rated current of the ducting, and which is perfectly inscribed, with a light lateral clearance, in the same C shaped section of the different grooves (16) of the support (8).

2. The electric ducting as claimed in claim 1, characterized in that, at the level of each tapping point (30), the bottom of each of the U shaped conducting bars (7 ; 17 ; 27) has mounted perpendicularly thereon a tapping piece (20 ; 40 ; 60) made from an electrically conducting material which extends in the direction of the length of the bar while projecting from the support (8) of the conducting bars, which has in cross section an approximate shape of an omega in which the two lateral faces of the central part are flat and whose two side legs are fixed on the bottom of the bar, and which is adjusted in height with respect to the bottom of the bar depending on the rated current of the ducting, so as to keep the same depth dimensions for the bar-tapping assembly, whatever the rated current of the ducting, each current tapping member being formed by a contact clamp (50) clipped on to the flat lateral faces of the central portion of the corresponding omega tap (20 ; 40 ; 60) by insertion in the corresponding orifice (37) of the tapping point.

3. The electric ducting as claimed in claim 2, characterized in that each U shaped conducting bar (7 ; 17 ; 27) is made from aluminium, whereas each omega shaped tapping (20 ; 40 ; 60) is a bi-metal piece made from copper on aluminium, and each bi-metal omega shaped tap is fixed by its two lateral legs on the bottom of the associated aluminium bar, either by electric spot welding, or by ultrasonic welding.

4. The electric ducting as claimed in claim 3, characterized in that the two flat lateral faces of the central portion of each omega shaped bi-metal tapping are at least partially coated respectively with two parallel silver layers (44) extending over the whole length of the tapping piece and forming respectively two localized contact areas on which the associated contact clamp (50) is received.

5. The electric ducting as claimed in one of claims 2 to 4,
characterized in that each of the tapping points (30) is in the form of a substantially parallelepipedic block made from insulating material which is engaged in a rectangular opening (34) formed in the longitudinal wall (35) of the casing parallel to the one forming the bottom (3a) of the casing, and which comprises in its lower face a plurality of recesses (48), in number equal to that of the conducting bars, formed side by side parallel to the bars with the same between axis distance as the latter, and separated by parallel longitudinal dividing walls (56), each of these recesses housing the projecting portion of the omega shaped tap associated with the corresponding conducting bar so that the insulating block (30) is applied flat by its dividing walls on the ribs (12, 15) of the conducting bar support (8), each recess (48) communicating with the orifice (37) provided on the upper face of the insulating block so as to allow the contact clip (50) to have access to the corresponding tap.

6. The electric ducting as claimed in claim 5, characterized in that the insulating block (30) has two lateral legs (57) resting on the bottom (3a) of the casing on each side of the conducting bar support (8) and in light bearing relation respectively on the two lateral ribs (12) of this bar support so as to allow a certain longitudinal sliding of the support (8) in the case of expansion thereof.

7. The electric ducting as claimed in claim 5 or 6, characterized in that said longitudinal dividing walls (56) of the insulating block (30) are formed axially with an opening (71) serving for the passage of a low current insulated electric conductor (69) in a direction parallel to the longitudinal axis of the casing, and the upper face of the insulating block (30) has bores (75) communicating respectively with the passage openings (71) for the conductors (69) and each giving access to a bared portion (69a) of the conductor capable of receiving by engagement in the associated bore a removable electric connection member (76).

8. The electric ducting as claimed in one of claims 1 to 6, characterized in that it comprises, inside the casing (2) between two successive tapping points, at least one flat insulating wedge (62) for applying the conducting bar support (8) against the bottom (3a) of the casing, which is inserted in bearing relation and flat between the top of the bar support (8) and the internal face of the longitudinal wall (35) of the casing parallel to that forming the bottom of the casing and which has two lateral legs (65) resting on the bottom (3a) of the casing on each side of the support (8) and being respectively in slight bearing relation on the two lateral ribs (12) of the bar support, so as to allow a certain longitudinal sliding of the support (8) during expansion of the latter.

9. The electric ducting as claimed in claims 7 and 8, characterized in that said wedge (62) has the general form of a ring whose lower edge (62a) rests partially on the ribs (12, 15) of the conducting bar support (8) and whose upper edge (62b) comprises a plurality of notches (73), in number equal to twice that of the openings (71) formed in the insulating block (30), these notches (73) being aligned in pairs respectively with said openings in respective directions parallel to the longitudinal axis of the casing, each pair of aligned notches serving for supporting and holding in position the low current insulated electric conductor (69) passing through the corresponding opening (71) of the insulating block.

FIG. 1

FIG. 2

FIG. 3

FIG.4

FIG.7

# FIG.5

# FIG.6

# FIG.8

EP 0 330 525 B1

FIG.9

FIG.10

EP 0 330 525 B1